# EUROPEAN PATENT APPLICATION

(11) **EP 4 461 157 A1**
(43) Date of publication of application: **13.11.2024**
(21) Application number: 23172850.2
(22) Date of filing: 11.05.2023
(51) Int. Cl.: A46B 9/02, A46B 9/04, A46D 1/00

(54) **ORAL HEALTH CARE**

(71) Applicant: Koninklijke Philips N.V., 5656 AG Eindhoven (NL)
(72) Inventor: GOTTENBOS, Bart, Eindhoven (NL); ADRIAENSEN, Guido Antonius Theodorus, Eindhoven (NL)
(74) Representative: Philips Intellectual Property & Standards

(57) **Abstract**

A brushing mouthpiece device for insertion into a subject's mouth and cleaning an oral surface during use with at least one group of first and second cleaning elements respectively, wherein the second cleaning elements are stiffer than the first cleaning elements and adapted to contact a tooth during use so that the force generated by the stiff second cleaning elements pushing against a tooth urges the mouthpiece to a target alignment position relative to the subject's teeth, whilst still cleaning.

## Description

### FIELD OF THE INVENTION

This invention relates to the field of oral health care, and in particular to the field of oral cleaning devices.

### BACKGROUND OF THE INVENTION

Within the area of personal oral cleaning, it remains a challenge to optimize the structure and configuration of oral cleaning devices so as to enable best cleaning performance for all types of teeth, and for all areas of each tooth.

One growing area of development is that of mouthpieces. Mouthpieces are envisioned to disrupt the toothbrush market in the future, as they have the potential to brush faster, more consistently and more completely than a toothbrush whilst also being less dependent on the technique of the subject. However, no acceptable cleaning mouthpieces have to this date reached the market that can compete with a normal toothbrush in cleaning functionality. Designing a mouthpiece which works as well as a manual toothbrush has proven to be a major challenge.

One of the largest problems facing mouthpiece development today is how to ensure proper alignment of the mouthpiece when in the subject's mouth. Cleaning bristles work best when they are touching the teeth with a specific force. However, the typical optimal bristles for cleaning and comfort are too weak to stop a subject pressing their teeth up against the bristles, i.e. misaligning the mouthpiece and biasing one side, and over-compressing the bristles. This results in poor oral cleaning on both sides of the mouth due to over-compression on one side and under-compression on the other. Over compression may also ultimately result in a damaged mouthpiece.

The cleaning elements cannot simply be made stiffer, however, as stiffer cleaning elements are not optimal for oral cleaning and may damage gum tissue. A solution to this problem is therefore highly desirable.

### SUMMARY OF THE INVENTION

The invention is defined by the claims.

According to examples in accordance with an aspect of the invention, there is provided a mouthpiece device for insertion into a subject's mouth and cleaning an oral surface during use.

A mouthpiece device for insertion into a subject's mouth and cleaning an oral surface during use, comprising: at least one group of first cleaning elements projecting from a surface of the mouthpiece device, the at least one group of first cleaning elements having a first stiffness value, and wherein the at least one group of first cleaning elements is adapted to clean an oral surface during use; at least one group of second cleaning elements projecting from a surface of the mouthpiece device, the at least one group of second cleaning elements having a second stiffness value which is higher than the first stiffness value, and wherein the at least one group of second cleaning elements is adapted to contact at least one tooth surface of the subject during use to urge the mouthpiece to a target alignment position relative to the subject's teeth.

Proposed concepts thus aim to provide schemes, solutions, concept, designs, methods and systems pertaining to a mouthpiece device for insertion into a subject's mouth and cleaning an oral surface during use.

In particular, embodiments aim to provide a mouthpiece device with at least one group of first and second cleaning elements respectively, wherein the second cleaning elements are stiffer than the first cleaning elements and adapted to contact a tooth during use so that the force generated by the stiff second cleaning elements pushing against a tooth urges the mouthpiece to a target alignment position relative to the subject's teeth, whilst still cleaning.

In other words, by having a group of stiffer second cleaning elements, relative to the first cleaning elements, it will be easier for the mouthpiece to stay in an optimal oral cleaning position, and harder for subject to push the mouthpiece to one side, thereby over-compressing the softer first cleaning elements on one side and under-compressing them on the other.

By having both stiff and soft cleaning elements, the soft cleaning elements can more optimally clean, whilst the stiff cleaning elements can keep the mouthpiece in relative alignment to the subject's teeth. The stiffness of the cleaning elements is especially important around gums which need soft elements in order not to be damaged. The two sets of cleaning elements thus synergistically work together. The stiffer second cleaning elements may also be shorter than the softer first cleaning elements, so that the first cleaning elements may bend a little to clean during use, as is beneficial, but not bend so much that they may be damaged or that the first cleaning elements on the other side no longer contact the tooth surface.

By providing stiffer second cleaning elements, it will be harder for the subject to push their mouthpiece out of a target alignment position, i.e. substantially central relative to the arcuate contour of the subject's teeth. By having the mouthpiece being naturally urged to the target alignment position by the stiff cleaning elements contacting the teeth of the subject, more optimal cleaning may be provided, wherein more bristle-tooth contact may be provided and less bristles may be bent and damaged. This is true even when the cleaning elements are not bristles or tufts of bristles but projections for waterjets. For instance, waterjets work optimally at a certain distance from a subject's teeth.

In summary, by including two groups of cleaning elements in a mouthpiece device, one group stiffer than the other, both groups may clean the subject's oral surfaces. However, the stiffer second cleaning elements, which may clean less well than the first, may also aid in positioning the mouthpiece by contacting a tooth of the subject. The force of the stiffer second cleaning elements against the teeth of the subject will urge the mouthpiece towards a central target alignment position.

Ultimately, an improved mouthpiece device for insertion into a subject's mouth and cleaning an oral surface during use may be supported by the proposed concept(s).

In some embodiments, the at least one group of first cleaning elements and the at least one group of second cleaning elements may project from the same surface of the mouthpiece device. This may allow the second cleaning elements to stop a side of the mouthpiece which has first cleaning elements from over-compressing on an oral surface.

In some embodiments, the at least one group of first cleaning elements may be proximate to the at least one group of second cleaning elements. This may allow the second cleaning elements to directly stop the first cleaning elements from over-compressing on an oral surface.

In some embodiments, the first cleaning elements may project from the surface of the mouthpiece device a first distance, the second cleaning elements may project from the surface of the mouthpiece device a second distance, and the second distance may be shorter than the first distance. This may allow the first cleaning elements to bend a certain amount, which is beneficial for oral cleaning, whilst the mouthpiece may still be kept in a target alignment position within certain bounds, i.e. within a gap between the shorter second cleaning elements on opposite sides of the mouthpiece device.

In some embodiments, an oral surface may be at least one of: a tooth surface, a gum surface, a tongue surface, a cheek surface. These are all the oral surfaces a subject may wish to clean, and which a mouthpiece may be capable of cleaning.

In some embodiments, the at least one group of second cleaning elements may be adapted to contact at least one of a facial and lingual upper half of a tooth crown of the subject during use. This may keep the stiffer second cleaning elements away from the subject's gums, which may be damaged by the stiff cleaning elements. The stiff cleaning elements do not need to contact the lower surfaces of the teeth of the subject to help align the mouthpiece.

In some embodiments, the at least one group of second cleaning elements may be adapted to contact the central developmental groove of the occlusal plane of the subject. The central developmental groove of the occlusal plane lies approximately in the middle of the molars and premolars. Having the second cleaning elements contact this central groove will help the mouthpiece align itself centrally.

In some embodiments, the mouthpiece device may further comprise: a mouthpiece portion for at least partial receipt in the subject's mouth during use; and wherein the body of the mouthpiece portion defines a tooth receiving channel defining an arcuate contour shaped for approximately following a contour of at least a portion of the subject's dental arch to permit receipt of a row of teeth into the channel.

In some embodiments, the tooth receiving channel may be a continuous channel. In other words, the walls of the channel may form a continuous wall from which cleaning elements may protrude continuously or discontinuously. This may be referred to as a closed design.

In some embodiments, the tooth receiving channel may be a discontinuous channel. In other words, the walls of the channel may consist of discrete bristle platens with gaps between them, otherwise referred to as fingers. This may be referred to as an open design.

In some embodiments, the at least one group of second cleaning elements may project from a face of the tooth receiving channel. This may allow the second cleaning elements to contact the subject's teeth if the mouthpiece is pressed towards one side of the subject's mouth.

In some embodiments, the at least one group of first cleaning elements may project from a face of the tooth receiving channel. This may allow the first cleaning elements to clean the subject's teeth and gums.

In some embodiments, the at least one group of first cleaning elements may project from a face of the tooth receiving channel, and the at least one group of second cleaning elements may project from the same face. This may allow the second cleaning elements to stop a side of the mouthpiece which has first cleaning elements from over-compressing on an oral surface.

In some embodiments, the target alignment position may be a position at which the teeth of the subject are positioned substantially centrally within the tooth receiving channel.

In some embodiments, the target alignment position may define a position and orientation of the mouthpiece relative to the subject's teeth, based on at least one of: such that the teeth are positioned centrally in the tooth receiving channel; an optimal cleaning position; such that a majority of the first cleaning elements contact an oral surface of the subject; such that the first cleaning elements are unlikely to be bent to less than 20% of their length; such that the first cleaning elements are unlikely to be bent to less than the length of the second cleaning elements.

In some embodiments, the target alignment position may define a position wherein the surface area of contact between the first cleaning elements and the teeth of the subject exceeds a minimal threshold value.

In some embodiments, the target alignment position may define a position wherein a proportion of the first cleaning elements in contact with the teeth of the subject exceeds a minimal threshold value.

In some embodiments, a stiffness value may be defined as a stiffness per unit length value.

In some embodiments, the at least one group of first cleaning elements may project from an inner surface of the mouthpiece device. This may allow the first cleaning elements to clean a subject's teeth or gums.

In some embodiments, the at least one group of first cleaning elements may project from an outer surface of the mouthpiece device. This may allow the first cleaning elements to clean a subject's cheeks or tongue.

In some embodiments, an inner surface of the mouthpiece device may be defined as an inwardly facing surface of the mouthpiece device adapted to face a subject's tooth during use.

In some embodiments, a cleaning element may be one of: a bristle; a tuft of bristles; a fibre; a group of fibres; an elongate projection that has an orifice for a waterjet. These elements have been found to be beneficial in cleaning oral surfaces.

In some embodiments, the mouthpiece device may be a brushing mouthpiece device, and wherein a cleaning element is one of: a bristle; a tuft of bristles; a fiber; a group of fibers.

In some embodiments, the mouthpiece device may be a waterjet mouthpiece device, and wherein a cleaning element is an elongate projection that has an orifice for a waterjet.

According to another aspect of the invention, there is provided an oral cleaning system comprising any herein disclosed mouthpiece device.

Thus, there may be proposed concepts for providing a mouthpiece device for insertion into a subject's mouth and cleaning an oral surface during use comprising first cleaning elements and stiffer second cleaning elements.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figs. 1A and 1B schematically illustrate an arrangement of first and second cleaning elements according to two proposed embodiments respectively;
Fig. 2A is a schematic diagram showing a mouthpiece device with a continuous tooth receiving channel according to a proposed embodiment;
Fig. 2B is a schematic diagram showing a section of a mouthpiece device with a discontinuous tooth receiving channel according to a proposed embodiment;
Fig. 3A is a schematic diagram of a cross-section of a mouthpiece around a molar in a target alignment position according to a proposed embodiment;
Fig. 3B is a schematic diagram of a cross-section of a mouthpiece around a molar not in a target alignment position according to a proposed embodiment; and
Fig. 4 is a simplified block diagram of an oral cleaning system comprising a mouthpiece device according to a proposed embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to mouthpiece devices for insertion into a subject's mouth and cleaning an oral surface during use. According to proposed concepts, a number of possible solutions may be implemented separately or jointly. That is, although these possible solutions may be described below separately, two or more of these possible solutions may be implemented in one combination or another.

Embodiments of the invention aim to provide a mouthpiece device for insertion into a subject's mouth and cleaning an oral surface during use which include both stiff and soft cleaning elements. The soft cleaning elements can more optimally clean oral surfaces, especially gums which need soft elements in order not to be damaged, whilst the stiff cleaning elements can keep the mouthpiece in relative alignment to the subject's teeth. A subject may be, for example, otherwise referred to as a user or a patient. Further, the subject may be a human or an animal.

Proposed concepts thus aim to provide a mouthpiece device which includes at least one group of first and second cleaning elements respectively, wherein the second cleaning elements are stiffer than the first cleaning elements, and oral cleaning systems including a said mouthpiece device, thereby providing improved tooth cleaning.

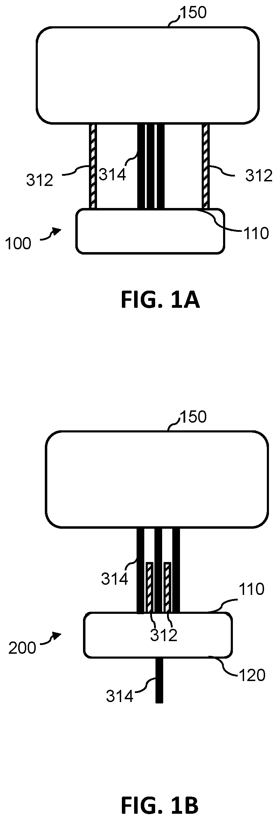

Referring now to Fig. 1A and Fig. 1B, there are depicted schematic illustrations of arrangements of first and second cleaning elements according to two proposed embodiments respectively.

Fig. 1A depicts a small portion 100 of a mouthpiece device with one group of first cleaning elements 314 projecting from an inner surface 110 of the mouthpiece device. This small portion 100 may be a discrete cleaning element platen in a mouthpiece device with a discontinuous tooth receiving channel. Spaced apart on either side of the group of first cleaning elements 314 are two groups of second cleaning elements 312 projecting from the same surface 110 of the mouthpiece device. All groups of first and second cleaning elements, 314 and 312, are contacting a tooth 150 of the subject, and the stiffer second cleaning elements are thus urging the mouthpiece to a target alignment position relative to the subject's teeth by resisting the tooth getting too close to the small portion 100 of the mouthpiece device.

To optimally follow the contour of the subject's teeth, minimize forces and maximize comfort on the gums, the use of thin bristles as cleaning elements in mouthpiece devices has been found to be beneficial. For example, the bristles may be 0.1016 to 0.127 mm nylon bristles. Optimization of the bristle field for a combination of good cleaning and minimal forces have additionally driven mouthpiece designs towards lower bristle field densities. The combination of the thin bristles and low bristle densities however makes the bristle field act like a weak spring, which introduces several problems. One is that the bristle field is unable to counteract the forces exerted by the stiffness of the mouthpiece and cannot push the mouthpiece into the required shape to follow the shape of the subject's jaw. Another is that the bristle field cannot counteract biasing forces of the subjects' handling. Another, if the mouthpiece comprises a discontinuous tooth receiving channel, is that the bristle field cannot push fingers of the mouthpiece outwards if the teeth are too big for the mouthpiece design.

These problems can result in over-compression of bristles. Over-compression of bristles can occur, for instance, when bristles are pushed in over more than 60% of their length, i.e., if 5mm-long bristles are pushed more than 3mm towards a tooth surface. Over-compression may reduce cleaning efficacy, but also may permanently deform and damage the bristles. A mouthpiece with a weak bristle field design would likely therefore need replacement often which would be highly expensive.

Over-compression on one side of a mouthpiece could also lead to under-compressing on the opposite side, also resulting in poor cleaning or a situation in which the bristles on that side may not even reach a tooth of the subject at all.

The main element of this invention could thus be said to be the introduction of stiffer cleaning elements in strategic locations in the mouthpiece in order to aid proper alignment of the mouthpiece.

In this embodiment, the at least one group of first cleaning elements 314 and the at least one group of second cleaning elements 312 project from the same surface 110 of the mouthpiece device 100. This may allow the second cleaning elements to directly stop the first cleaning elements from over-compression on an oral surface. The cleaning elements, 314 and 312, are tufts of bristles. They may, however, be individual bristles, individual fibres, or a group of fibres. These elements have been found to be beneficial in cleaning oral surface.

In this embodiment, the mouthpiece device is a brushing mouthpiece device but in other embodiments, the mouthpiece device may be a waterjet mouthpiece device. In embodiments where the mouthpiece device is a waterjet mouthpiece device, the first and second cleaning elements, 314 and 312, would be elongate projections that have an orifice for a waterjet. In embodiments where the mouthpiece device is a waterjet mouthpiece device, the first and second cleaning elements, 314 and 312, may be any elements that permit a waterjet to be emitted towards an oral surface of the subject.

The oral surface being cleaned in Fig. 1A is a tooth 150 of the subject. The oral surface could also be, however, a gum surface, a tongue surface, or a cheek surface of the subject.

The height placement of the bristles, 314 and 312, cannot be seen in the view of Fig. 1A, but the at least one group of second cleaning elements 312 are adapted to contact at least one of a facial and lingual upper half of a tooth crown 150 of the subject during use. This keeps the stiffer second cleaning elements away from the subject's gums, which may be damaged by the stiff cleaning elements. The stiff cleaning elements do not need to contact the lower surfaces of the teeth of the subject in order to help align the mouthpiece.

In other words, the stiff second cleaning elements 312 may be placed in locations where they are adapted to only contact crowns of the subject's teeth 150, so that gum comfort of the subject is not compromised. For example, the second cleaning elements 312 could be vertically aligned with a column of first cleaning elements 314, and in this way, the column would not be hampered by the stiffer second cleaning elements when moving into an interdental space. Optimal contour following may then be provided.

The height (position in the direction of the longitudinal axis of the teeth) of the second cleaning elements 312 should thus be such that they do not contact the subject's gums when in use. The second cleaning elements 312 may then be placed so that they are adapted to contact the top half of the subject's tooth crowns 150 when in use. Another option is to position the second cleaning elements 312 such that they are not placed beyond the distance of the height of the shortest teeth in a targeted subject location. This positioning may be based on data describing the range of population tooth heights. The second cleaning elements 312 may thus be positioned so that, in use, they will be at least 1mm away from the gums of the lowest tooth height in a targeted population (which may, for instance, be the lowest 5^{th} percentile).

The position of the second cleaning elements 312 along the direction of the subject's dental arch is less important. In the case of localized bristle fields, e.g. thin vertical columns of first cleaning elements 314 parallel to the tooth height axis, however, it would be preferable to position the second cleaning elements 312 in the same column position or close to them. Columns may have the advantage of better contour following if located strategically at approximately the distance between interdental spaces. If the second cleaning elements 312 were organised in layouts other than bristle columns, this advantage may be partially lost.

In this embodiment, the at least one group of first cleaning elements 314 may project from an inner surface of the mouthpiece device 100. This may allow the first cleaning elements 314 to clean a subject's teeth 150 or gums.

In some embodiments, an inner surface of the mouthpiece device 100 may be defined as an inwardly facing surface of the mouthpiece device adapted to face a subject's tooth 150 during use.

In some embodiments, the target alignment position may define a position wherein the surface area of contact between the first cleaning elements 314 and the teeth of the subject exceeds a minimal threshold value.

In some embodiments, the target alignment position may define a position wherein a proportion of the first cleaning elements 314 in contact with the teeth of the subject exceeds a minimal threshold value.

In some embodiments, a stiffness value may be defined as a stiffness per unit length value.

Brushing may be optimal if cleaning elements, 314 and 312, are stiff in the primary direction of brushing. In this way, the needed force for optimal brushing is maintained, and there may also be embodiments where a tapping motion is induced in the cleaning elements, 314 and 312, to further enhance brushing performance.

Fig. 1B depicts a small portion 200 of a mouthpiece device of another embodiment with one group of first cleaning elements 314 projecting from an inner surface 110 of the mouthpiece device. Within the group of first cleaning elements 314 is a group of second cleaning elements 312, which are shorter than the first and which are adapted to contact the tooth 150 of the subject if the tooth of the subject gets too close to the mouthpiece device, thereby urging the mouthpiece back to a target alignment position. There is also provided another group of first cleaning elements 314 projecting from an outer surface 120 of the mouthpiece device. The outer first cleaning elements 314 may then be able to clean a subject's cheeks or tongue.

In this embodiment, the at least one group of first cleaning elements 314 are proximate to the at least one group of second cleaning elements 312. This allows the second cleaning elements 312 to directly stop the first cleaning elements 314 from over-compressing on an oral surface.

The first cleaning elements 314 project from the surface 110 of the mouthpiece device 200 a first distance, the second cleaning elements 312 may project from the surface 110 of the mouthpiece device a second distance, and the second distance may be shorter than the first distance. This may allow the first cleaning elements 314 to bend a certain amount, which is beneficial for oral cleaning, whilst the mouthpiece may still be kept in a target alignment position within certain bounds, i.e. within a gap between the shorter second cleaning elements 312 on opposite sides of the mouthpiece device 200.

In some embodiments, the second cleaning elements 312 may have a length which is specified by a limit of the compression value, e.g. for first cleaning elements 314 which project from a surface 110 of the mouthpiece device 6mm, and where a maximum limit for compression is determined to be 67%, the second cleaning elements 312 may be configured to project 2mm from the surface 110 of the mouthpiece device.

The length of the second cleaning elements 312 is a key design parameter and depends on a determined maximum allowed compression of the first cleaning elements 314. For example, if the first cleaning elements 314 should not be clamped more than 70% of their length, then the length of the second cleaning elements 312 should be chosen at 30% of the length of the first cleaning elements 314.

In other embodiments, the length of the second cleaning elements 312 may be chosen further based on the flexibility of the mouthpiece device. If the mouthpiece device, or the fingers of it in the case of a discontinuous mouthpiece device, is flexible enough to bend more than the second cleaning elements 312 for a given force, then the bending of the first and second cleaning elements, 314 and 312, may be prevented. In other words, preferably, the combined stiffness of the second cleaning elements 312 with its respective section of the mouthpiece should be higher than a combined stiffness of the first cleaning elements 314 with its respective section of the mouthpiece. For example, in the case of a discontinuous mouthpiece device, the fingers may be attached to an arch of the discontinuous mouthpiece with a bending connection, which makes the finger bend out at large forces (e.g. at a particularly wide molar). This bending may then occur before the second cleaning elements 312 in that finger bend significantly, thereby still urging the mouthpiece into a target alignment position.

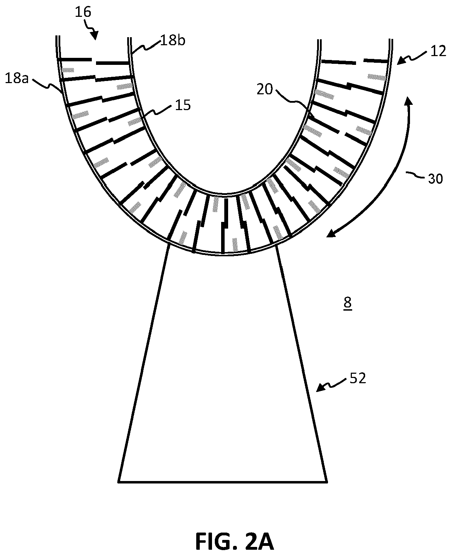

Referring now to Fig. 2A, there is depicted a schematic diagram showing a mouthpiece device 8 with a continuous tooth receiving channel 16 according to a proposed embodiment. The mouthpiece device 8 is shown with an arch-shaped mouthpiece portion 12 for insertion in the mouth and a handle 52 attached thereto. The mouthpiece portion body 12 comprises upper and lower continuous tooth receiving channels 16 (lower channel not visible), each bounded on either side by boundary walls 18a, 18b, from each of which protrude an array of first cleaning elements 20 and second cleaning elements 15 which extend into the channel 16. The tooth receiving channels define an arcuate contour 30 shaped for approximately following a contour of at least a portion of a subject's dental arch.

In some embodiments, first cleaning elements may protrude from an outside of the boundary walls, 18a or 18b, configured to clean the subject's cheeks or tongue respectively.

In general, a provided mouthpiece device may be adapted for cleaning teeth around the whole of a dental arch of the subject, or just a portion of the dental arch, for example half of the dental arch, or a smaller section of the dental arch. By way of example, an overall shape of the mouthpiece device may be a C-shape for treating a full jaw or for example a J-shape to treat half a jaw, or even smaller shapes to treat multiple teeth spanning a lesser portion of the jaw. The walls, 18a and 18b, of the channel 16 are continuous from which cleaning elements 20 and 15, may protrude continuously or discontinuously. This may be referred to as a closed design mouthpiece device.

In other words, in this embodiment, the mouthpiece device 8 further comprises a mouthpiece portion 12 for at least partial receipt in the subject's mouth during use; and wherein the body of the mouthpiece portion 12 defines a tooth receiving channel 16 defining an arcuate contour shaped for approximately following a contour of at least a portion of the subject's dental arch to permit receipt of a row of teeth into the channel 16.

The at least one group of second cleaning elements 15 project from a face of the tooth receiving channel 16. This allows the second cleaning elements 15 to contact the subject's teeth if the mouthpiece is pressed towards one side of the subject's mouth.

The at least one group of first cleaning elements 20 project from a face of the tooth receiving channel 16. This allows the first cleaning elements 20 to clean the subject's teeth and gums.

The first cleaning elements 20 and second cleaning elements 15 project from the same face(s) of the tooth receiving channel 16. This allows the second cleaning elements 15 to stop a side of the mouthpiece 8 which has first cleaning elements 20 from over-compressing on an oral surface.

In some embodiments, the first cleaning elements 20 and/or second cleaning elements 15 may be used to administer whitening to the subject's teeth.

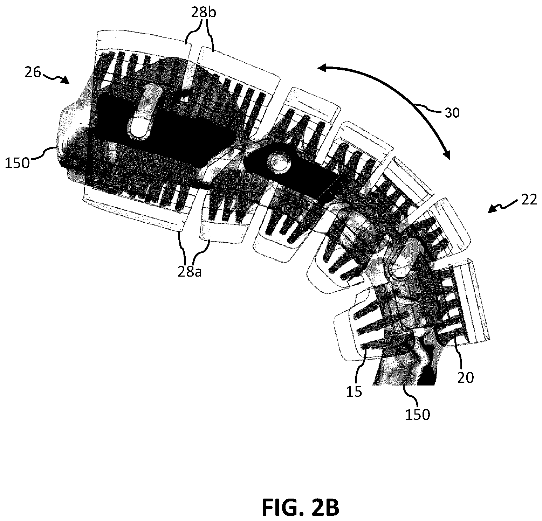

Referring to Fig. 2B, there is depicted a schematic diagram showing a section 22 of a mouthpiece device with a discontinuous tooth receiving channel 26 according to a proposed embodiment. The walls of the tooth receiving channel 26 consist of discrete cleaning element platens, 28a and 28b, with gaps between them. These discrete platens, 28a and 28b, may also be referred to as fingers. A discontinuous tooth receiving channel 26 may be able to follow the contour 30 of the subject's teeth more flexibly, and also more flexibly adjust to a changing width of the subject's teeth 150 along their jaw.

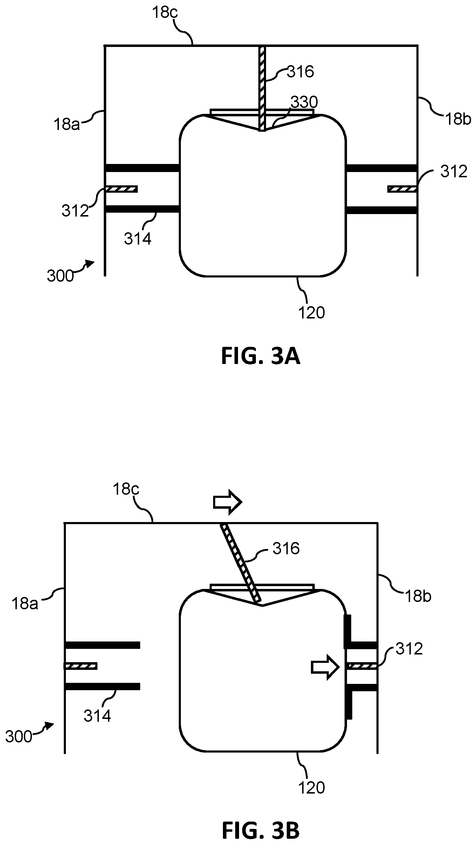

Referring to Figs. 3A and 3B, there are depicted schematic diagrams of a cross-section of a mouthpiece device 300 according to a proposed embodiment around a molar 120 both in a target alignment position and not in a target alignment position respectively.

In Fig. 3A, the mouthpiece device 300 is in a target alignment position, wherein the molar 120 of the subject is centrally located within a tooth receiving channel 16 of the mouthpiece device 300. In this cross-section of the mouthpiece device 300, three groups of second cleaning elements, 312 and 316, can be seen, as well as four groups of first cleaning elements 314 contacting and cleaning the molar 120. The second cleaning elements 312 project from the sides, 18a and 18b, of the mouthpiece device and are adapted to contact a surface of the subject's molar 120 if the mouthpiece device 300 moves too far away from the target alignment position. By contacting the tooth 120, the stiffer second cleaning elements 312 will therefore urge the mouthpiece device 300 towards the target alignment position.

The mouthpiece device 300 also includes, however, another group of second cleaning elements 316 adapted to contact the central developmental groove 330 of the occlusal plane of the subject. The central developmental groove 330 of the occlusal plane lies approximately in the middle of the molars 120 and premolars. Having the second cleaning elements 316 contact this central groove 330 will help the mouthpiece align itself centrally.

In other words, stiff centring second cleaning elements 316 may thus be provided at the occlusal bristle field so that they may follow the central grooves 330 of the molars 120 and/or premolars. In some embodiments, the second cleaning elements 316 adapted to contract the central groove 330 of the occlusal plane of the subject may project from a surface 18c of the mouthpiece device 300 a third distance, wherein the third distance is the same or longer than the first distance, and wherein the third distance is the same or longer than the second distance. By having the stiff centring second cleaning elements 316 be the same length or longer than the first cleaning elements 314, they may be able to dive into the deepest middle central developmental groove 330 of the subject's occlusal plane. This allows the mouthpiece device 300 to help centre itself relative to the subject's teeth to avoid bias and thus reduce the risk of poor cleaning on one side and discomfort or damage on the other.

Stiff centring second cleaning elements 316, otherwise referred to as occlusal elements, only work in relation to molars 120 and premolars, which have central developmental grooves 330, but may aid in the overall positioning of the mouthpiece device 300. In some embodiments, the occlusal elements may be placed so that they are adapted to contact the average position of the central groove 330 of molars 120 and premolars in a target population.

In some embodiments, the occlusal elements 316 are stiff bristle tufts so that they may clean and also have some flexibility to adapt shape if high forces are applied to the mouthpiece. Bristle diameters of the tufts should be chosen relatively high, e.g. 0.1778mm or larger. Tuft size should also be relatively large, at least 1mm wide. In beam bending theory, the stiffness of a bristle is dependent on the diameter of the bristle to the power of four. The stiffness of a tuft is roughly dependent on the number of bristles in that tuft multiplied by the stiffness of a single bristle. As the number of bristles in a tuft is dependent on the bristle diameter then the tuft stiffness will always be higher for larger diameters.

In Fig. 3B, the mouthpiece device 300 is not in a target alignment position, but instead pushed towards one side of the subject's molar 120 more than the other. This may be done by the subject themselves. In this case, two groups of the first cleaning elements 312 are being bent, which may result in damage, and the other two are not able to contact the molar 120. One group of the second cleaning elements 312 projecting from the side of the tooth receiving channel 18b closest to the molar 120 is able to contact the tooth and thus provide a force which can urge the mouthpiece device 300 back towards the target alignment position. The group of second cleaning elements 316 projecting from a floor/ceiling 18c of the tooth receiving channel is also in contact with the molar 120, specifically its central groove. This may further provide a force which can help urge the mouthpiece device 300 back towards the target alignment position.

In some embodiments, the mouthpiece device 300 may further comprise a motor for driving a vibration in the mouthpiece device 300. There may also be more than one motor or different kinds of actuators to induce the intended motion. Research has shown that a vibrating, tapping-like motion of the cleaning elements may provide improved tooth cleaning.

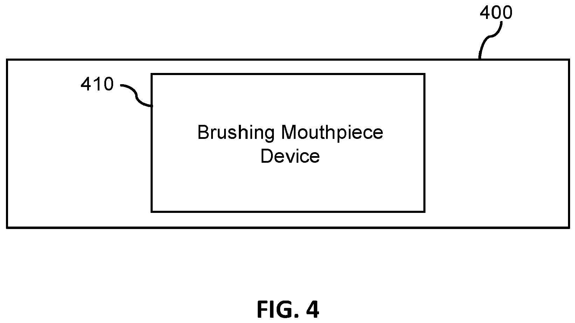

Referring now to Fig. 4, there is depicted a simplified block diagram of an oral cleaning system 400 comprising a mouthpiece device 410 according to a proposed embodiment. The mouthpiece device 410 may correspond to any disclosed herein embodiment of a mouthpiece device.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A mouthpiece device (8) for insertion into a subject's mouth and cleaning an oral surface during use, comprising:
at least one group of first cleaning elements (20) projecting from a surface of the mouthpiece device, the at least one group of first cleaning elements having a first stiffness value, and wherein the at least one group of first cleaning elements is adapted to clean an oral surface during use; and
at least one group of second cleaning elements (15) projecting from a surface of the mouthpiece device, the at least one group of second cleaning elements having a second stiffness value which is higher than the first stiffness value, and wherein the at least one group of second cleaning elements is adapted to contact at least one tooth surface of the subject during use to urge the mouthpiece to a target alignment position relative to the subject's teeth.

2. The device of claim 1, wherein the at least one group of first cleaning elements (20) and the at least one group of second cleaning elements (15) project from the same surface of the mouthpiece device, and preferably, wherein the at least one group of first cleaning elements are proximate to the at least one group of second cleaning elements.

3. The device of any prior claim, wherein the first cleaning elements (20) project from the surface of the mouthpiece device a first distance, the second cleaning elements (15) project from the surface of the mouthpiece device a second distance, and the second distance is shorter than the first distance.

4. The device of any prior claim, wherein an oral surface (150) is at least one of: a tooth surface, a gum surface, a tongue surface, a cheek surface.

5. The device of any prior claim, wherein the at least one group of second cleaning elements (15) are adapted to contact at least one of a facial and lingual upper half of a tooth crown of the subject during use.

6. The device of any prior claim, wherein the at least one group of second cleaning elements (15) are adapted to contact the central developmental groove (330) of the occlusal plane of the subject.

7. The device of any prior claim, wherein the mouthpiece device further comprises:
a mouthpiece portion (12) for at least partial receipt in the subject's mouth during use; and
wherein the body of the mouthpiece portion defines a tooth receiving channel (16) defining an arcuate contour shaped for approximately following a contour of at least a portion of the subject's dental arch to permit receipt of a row of teeth into the channel.

8. The device of claim 7, wherein the tooth receiving channel (16) is a continuous channel.

9. The device of claim 7, wherein the tooth receiving channel (16) is a discontinuous channel (26).

10. The device of any of claims 7 to 9, wherein the at least one group of second cleaning elements (15) project from a face of the tooth receiving channel (16), and preferably, wherein the at least one group of first cleaning elements (20) projects from a face of the tooth receiving channel.

11. The device of any of claims 7 to 9, wherein the at least one group of first cleaning elements (20) projects from a face of the tooth receiving channel (16), and the at least one group of second cleaning elements (15) projects from the same face.

12. The device of any prior claim, wherein a cleaning element is one of: a bristle; a tuft of bristles; a fiber; a group of fibers; an elongate projection that has an orifice for a waterjet.

13. The device of any of claims 1 to 11, wherein the mouthpiece device is a brushing mouthpiece device (8), and wherein a cleaning element is one of: a bristle; a tuft of bristles; a fiber; a group of fibers.

14. The device of any of claims 1 to 11, wherein the mouthpiece device is a waterjet mouthpiece device, and wherein a cleaning element is an elongate projection that has an orifice for a waterjet.

15. An oral cleaning system (400) comprising a mouthpiece device (410) according to any of claims 1-14.
